# EUROPEAN PATENT APPLICATION

(11) **EP 4 307 444 A1**
(43) Date of publication of application: **17.01.2024**
(21) Application number: 21962272.7
(22) Date of filing: 29.12.2021
(51) Int. Cl.: H01M 50/147

(54) **BATTERY COVER PLATE AND BATTERY**

(30) Priority: 28.10.2021 CN 202122616653 U
(71) Applicant: Eve Energy Co., Ltd., Huizhou, Guangdong 516006 (CN)
(72) Inventor: LIU, Liangliang, Guangdong 516006 (CN); ZHU, Yuan, Guangdong 516006 (CN); WANG, Zixia, Guangdong 516006 (CN)
(74) Representative: Herrero & Asociados, S.L.
(86) International application number: PCT/CN2021/142251
(87) International publication number: WO 2023/070931

(57) **Abstract**

A battery cover plate and a battery. The battery cover plate comprises a cover plate body and a pole assembly, wherein the pole assembly is in sealed connection with the cover plate body, the pole assembly comprises a pole body and a connector, and the pole body and the connector are respectively located on two sides of the cover plate body; the pole body comprises a limiting portion and an inserting portion connected to each other; the inserting portion is arranged on one side of the limiting portion; one side of the connector close to the pole body is recessed to form a mounting groove; and the inserting portion is configured to be inserted into the mounting groove so as to be fixed in the mounting groove.

## Description

The present disclosure claims priority of China Patent Application No. 202122616653.0, filed on October 28, 2021, the entire disclosures of which are incorporated herein by reference.

### TECHNICAL FIELD

The present disclosure belongs to the technical field of batteries, and in particular to a battery cap and a battery including the battery cap.

### BACKGROUND

With the development of modern society and the enhancement of environmental protection consciousness, more and more devices, such as mobile phone, laptop, power tool, electric vehicle, energy storage device, portable wearable device, etc., are chosen to apply rechargeable batteries as power sources. Especially, electric vehicles and energy storage devices are required with large-capacity batteries.

The huge demand for rechargeable batteries provides a broad space for the application and development of rechargeable batteries, and further puts forward higher performance requirements for batteries. The sealing performance of the battery cap affects the safety performance of the whole battery. For most of the batteries in the related art, the sealing effect is improved by increasing the size of the sealing member or the number of sealing members, which will increase the overall size of the battery; further, for most of the batteries in the related art, the capacity is improved by increasing the volume of the battery, while increasing the volume of the battery will increase the weight of the battery, which is not conducive to the lightweight design of the battery.

### SUMMARY OF THE DISCLOSURE

The present disclosure provides a battery cap, which is small in size and has a good sealing performance.

The present disclosure further provides a battery, which has a small column and a large capacity.

A battery cap, including: a cap body, defining a mounting hole; and a pole assembly, sealingly connected to the cap body and including a pole body and a connection member; wherein the pole body is disposed on a side of the cap body, and the connection member is disposed on another side of the cap body; the pole body includes a limiting portion and a socket portion that are connected to each other, the socket portion being disposed on a side of the limiting portion, and a side of the connection member close to the pole body is recessed to define a mounting groove; the socket portion is inserted into the mounting groove through the mounting hole, for fixing the pole body and the connection member.

A battery, including a housing, a cell, and the battery cap as above; wherein the cell is arranged in the housing, the battery cap is connected to the housing, and the pole assembly on the battery cap is electrically connected to the cell.

### BRIEF DESCRIPTION OF THE DRAWINGS

The present disclosure is described in further detail below in accordance with the accompanying drawings and embodiments.
FIG. 1 is a cross-sectional schematic view of a battery cap in Embodiment 1 of the present disclosure.
FIG. 2 is a decomposition schematic view of a battery cap in Embodiment 1 of the present disclosure.
FIG. 3 is a cross-sectional schematic view of a battery cap in Embodiment 2 of the present disclosure.
FIG. 4 is a decomposition schematic view of a battery cap in Embodiment 2 of the present disclosure.
FIG. 5 is a cross-sectional schematic view of a battery cap in Embodiment 3 of the present disclosure.
FIGS. 6 to 9 are schematic views of battery assembly steps in Embodiment 3 of the present disclosure.
FIG. 10 is a cross-sectional schematic view of a battery in Embodiment 4 of the present disclosure.
FIG. 11 is a cross-sectional schematic view of a housing in Embodiment 3 of the present disclosure (liquid injection hole are not shown).

Reference numerals: 1, battery cap; 101, pole body; 1011, socket portion; 1012, limiting portion; 102, connection member; 1021, mounting groove; 1022, boss; 103, cap body; 1031, mounting hole; 1032, weak zone; 1033, first portion; 1034, second portion; 1035, second groove; 1036, fourth groove; 104, first sealing member; 1041, sealing body; 1042, first sealing plate; 1043, second sealing plate; 1044, through hole; 1045, clamping groove; 2, housing; 201, liquid injection hole; 202, housing body; 2021, protrusion; 203, housing bottom; 204, third groove; 3, cell; 301, positive tab; 302, negative tab; 4, plug; 5, second sealing ring.

### DETAILED DESCRIPTION

In the description of the present disclosure, unless otherwise expressly provided and limited, the terms "connected", "coupled", "fixed" are to be understood broadly, for example, it may be a fixed connection, a detachable connection, or a one-piece connection; it may be a mechanical connection or an electrical connection; it may be a direct connection or an indirect connection through an intermediate medium; it may be a connection within two elements or an interactive relationship between the two elements. For those skilled in the art, the specific meaning of the above terms in the present disclosure may be understood in specific cases.

### Embodiment 1

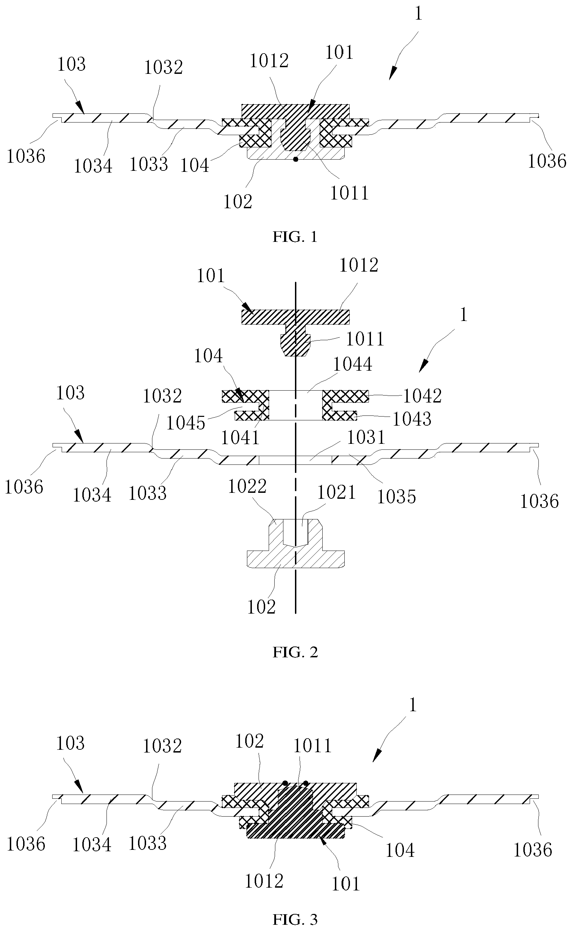

As shown in FIGS. 1 and 2, the present embodiment provides a battery cap 1, including a cap body 103 and a pole assembly; where the pole assembly is sealingly connected to the cap body 103, and the cap body 103 has an outer side and an inner side that are oppositely disposed; the outer side disposed in the cap body 103 is disposed on an outside of the battery, and the inner side disposed in the cap body 103 is disposed on an inside of the battery; the pole assembly includes a pole body 101 and a connection member 102, the pole body 101 being disposed on the outer side of the cap body 103, and the connection member 102 being disposed on the inner side of the cap body 103, and a mounting hole 1031 is defined on the cap body 103; the pole body 101 includes a limiting portion 1012 and a socket portion 1011 that are connected to each other, the socket portion 1011 being disposed on a side of the limiting portion 1012, and the connection member 102 being disposed close to the pole body 101, and a side of the connection member 102 close to the pole body 101 is recessed to define a mounting groove 1021; the socket portion 1011 is inserted into the mounting groove 1021 through the mounting hole 1031 to fix the pole body 101 and the connection member 102. The mounting groove 1021 is defined on the connection member 102, and the socket portion 1011 and the mounting groove 1021 are inserted and connected to realize a seamless connection between the pole body 101 and the connection member 102, which may reduce the risk of electrolyte inside the battery leaking from the pole assembly, thereby improving the sealing of the battery. Since the mounting groove 1021 is a blind slot structure, after reducing the size of the socket portion 1011 and the mounting groove 1021, it is further possible to ensure a stable connection between the pole body 101 and the connection member 102, i.e., the setting of the mounting groove 1021 reduces the size of the pole assembly, which in turn further reduces the thickness of the battery cap 1.

In some embodiments, the socket portion 1011 is riveted to the mounting groove 1021. By using riveting between the mounting groove 1021 and the socket portion 1011 for fixing, the connection strength of the mounting groove 1021 and the socket portion 1011 may be improved. In this case, the size of the pole body 101 and the connection member 102 may be appropriately reduced in order to reduce the thickness of the battery cap 1.

In the embodiments, the thickness of the pole assembly may be reduced to 1 mm.

In some embodiments, the hardness of a wall of the mounting groove 1021 is less than the hardness of the socket portion 1011. During an assembling process, the connection member 102 is required to be squeezed to realize the riveted fit between the mounting groove 1021 and the socket portion 1011. Reducing the hardness of the wall of the mounting groove 1021 may reduce the effort required for deformation of the wall of the mounting groove 1021, thereby reducing the difficulty of riveting the pole body 101 and the connection member 102.

In some embodiments, a dimension of a cross-section of an end of the socket portion 1011 away from the limiting portion 1012 is larger than a dimension of a cross-section of an end of the socket portion 1011 near the limiting portion 1012. After the socket portion 1011 is inserted into the mounting groove 1021, the wall of the mounting groove 1021, which has less hardness, is deformed under the action of an external force, such that the shape of the wall of the mounting groove 1021 is adapted to the shape of the mounting hole 1031. Further, since the dimension of the cross-section of the end of the socket portion 1011 away from the limiting portion 1012 is larger than the dimension of the cross-section of the end of the socket portion 1011 near the limiting portion 1012, the dimension of an opening of the mounting groove 1021 is correspondingly reduced, and the opening of the mounting groove 1021 may snap the larger-sized end of the socket portion 1011 into the mounting groove 1021, realizing a mortise-and-tenon connection between the pole body 101 and the connection member 102, thereby improving the strength of the connection between the pole body 101 and the connection member 102.

In some embodiments, a side of the connection member 102 near the pole body 101 protrudes to form a boss 1022, and an end surface of the boss 1022 is recessed for molding the mounting groove 1021. By arranging the boss 1022, a cantilever structure can be formed in the wall of the mounting groove 1021 to make the wall of the mounting groove 1021 proximate to the opening overhanging, such that the difficulty of the riveting of the mounting groove 1021 to the socket portion 1011 may be reduced, reducing the process requirements for assembling the battery cap 1. Before the assembling process, the dimensions of the opening of the mounting groove 1021 and a bottom of the mounting groove 1021 are the same, such that the socket portion 1011 can be inserted into the mounting groove 1021 without difficulty. Then the dimension of the opening of the mounting groove 1021 is reduced by means of extruding an outer side of the boss 1022 or the like, so as to realize riveted fixation of the two.

In some embodiments, the socket portion 1011 and the limiting portion 1012 are integrally molded, i.e., the pole body 101 is in a one-piece structure, and the connection member 102 and the boss 1022 are in a one-piece structure. By setting up the integrally molded pole body 101, the connecting strength of the pole body 101 and the connection member 102 may be improved and the sealing of the battery cap 1 may be improved, and the integrally molded connection member 102 and the boss 1022 also have the above advantages. In the embodiments, the material of the pole body 101 may be stainless steel, aluminum alloy, and other hardness metals, and the material of the connection member 102 may be aluminum or aluminum alloy. When selecting the material, it is only necessary to ensure that the hardness of the material of the connection member 102 is less than the hardness of the material of the pole body 101.

In some embodiments, the boss 1022 penetrates the mounting hole 1031 on the cap body 103. By arranging the boss 1022 penetrating the mounting hole 1031, the thickness of the battery cap 1 may be reduced, thereby reducing the size of the battery cap 1.

In some embodiments, the socket portion 1011 is welded to the bottom of the mounting groove 1021, and the black dot in FIG. 1 shows the welding position, which not only improves the stability of the connection of the two, but also improves the sealing of the two after the connection of the two, thereby improving the sealing of the battery cap 1. When the pole body 101 and the connection member 102 are riveted together, ultrasonic welding may be performed on the outer side of the battery cap 1, so as to stabilize the connection between the socket portion 1011 and the mounting groove 1021.

In some embodiments, a first sealing member 104 is arranged between the cap body 103 and the pole assembly. In the embodiments, the first sealing member 104 includes a sealing body 1041, a first sealing plate 1042, and a second sealing plate 1043; the first sealing plate 1042 is arranged at an end of the sealing body 1041, and the second sealing plate 1043 is arranged at another end of the sealing body 1041 opposite to the end; the sealing body 1041 defines a through hole 1044, and two ends of the through hole 1044 penetrate the first sealing plate 1042 and the second sealing plate 1043, respectively; the limiting portion 1012 abuts against the first sealing plate 1042, the connection member 102 abuts against the second sealing plate 1043, and the socket portion 1011 is inserted into the through hole 1044. By arranging the first sealing member 104, the electrolyte in the battery may be prevented from flowing out of a wall of the mounting hole 1031, thereby reducing the risk of electrolyte leakage and improving the safety performance of the battery. In the embodiments, the cap body 103 is made of metal; the first sealing member 104 may further act as an insulating member to insulate between the cap body 103 and the pole assembly, and the material of the first sealing member 104 is an insulating rubber or plastic such as soluble perfluoroalkoxy (PFA), polypropylene (PP), polybutylene terephthalate (PBT), or phenylenesulfide (PPS).

In some embodiments, a clamping groove 1045 is defined between the first sealing plate 1042, the second sealing plate 1043, and the sealing body 1041 of the first sealing member 104, and the cap body 103 is inserted into the clamping groove 1045, such that the first sealing plate 1042 and the second sealing plate 1043 together clamp the cap body 103, which improves the sealing between the first sealing member 104 and the cap body 103, reduces the risk of electrolyte leakage, and improves the safety performance of the battery.

In some embodiments, the melting point of the socket portion 1011 is lower than the melting point of the connection member 102. The black point in FIG. 1 is the welding position, and the heat generated by the welding may be quickly transferred to the socket portion 1011. However, there is a loss of heat in the process of transferring heat, i.e., the temperature of the socket portion 1011 is always lower than the temperature of the connection member 102. Therefore, the setting of the socket portion 1011 with a lower melting point may ensure the socket portion 1011 to melt and connect with the bottom of the mounting groove 1021 even if the temperature of the socket portion 1011 is slightly lower than the temperature of the connection member 102, which not only ensures the stability of the connection between the two, but also improves the sealing of the battery cap 1. In the embodiments, the connection member 102 and the pole body 101 are welded and fixed by ultrasonic welding, and of course, other welding methods, such as resistance welding, may be used, and the welding method can be selected according to the actual needs.

The battery cap 1 provided in the embodiments may be applied to a button battery or a pin battery, of course, the application scope of the battery cap 1 provided is not limited to the above two types of batteries, for example, the battery cover provided may also be applied to a square battery.

### Embodiment 2

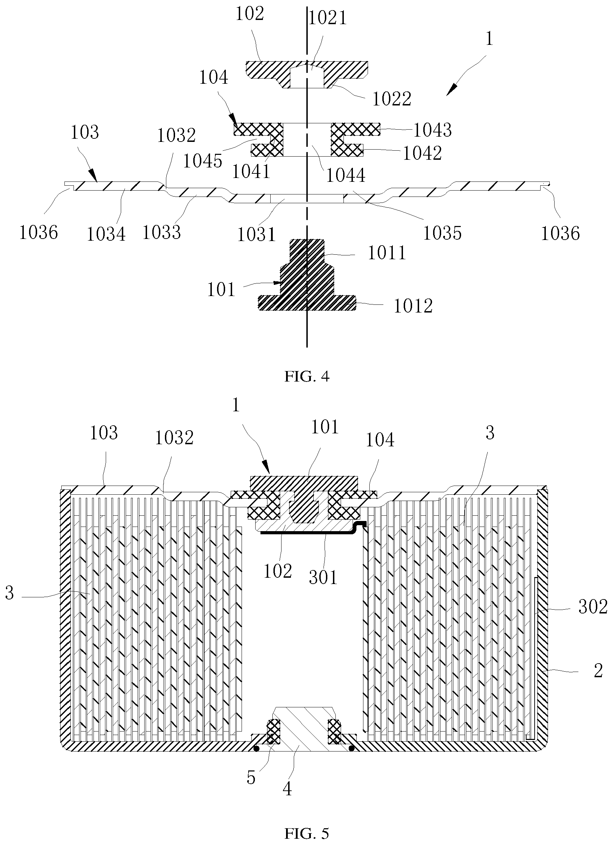

As shown in FIGS. 3 and 4, the present embodiment provides a battery cap 1 including a cap body 103 and a pole assembly, where the pole assembly is sealingly connected to the cap body 103, and the cap body 10 has an outer side and an inner side that are oppositely disposed; the outer side disposed in the cap body 103 is disposed on an outside of the battery, and the inner side disposed in the cap body 103 is disposed on an inside of the battery; the pole assembly includes a pole body 101 and a connection member 102, the pole body 101 being disposed on the inner side of the cap body 103, the connection member 102 being disposed on the outer side of the cap body 103, and a mounting hole 1031 is defined on the cap body 103; the pole body 101 includes a limiting portion 1012 and a socket portion 1011 that are connected to each other, the socket portion 1011 being disposed on a side of the limiting portion 1012, a side of the connection member 102 close to the pole body 101 is recessed to define a mounting groove 1021; the socket portion 1011 is inserted into the mounting groove 1021 through the mounting hole 1031, and the socket portion 1011 has an interference fit with the mounting groove 1021. The mounting groove 1021 is defined on the connection member 102, and the socket portion 1011 and the mounting groove 1021 are inserted and connected to realize a seamless connection between the pole body 101 and the connection member 102, which may reduce the risk of electrolyte inside the battery leaking from the pole, thereby improving the sealing of the battery. Since the mounting groove 1021 is a blind slot structure, and the mounting groove 1021 and the socket portion 1011 are riveted together, after reducing the size of the socket portion 1011 and the mounting groove 1021, it is further possible to ensure a stable connection between the pole body 101 and the connection member 102, i.e., the setting of the mounting groove 1021 reduces the size of the pole assembly, which in turn further reduces the thickness of the battery cap 1.

In the embodiments, the width of the pole assembly may be reduced to 3 mm.

In some embodiments, the hardness of the socket portion 1011 is less than the hardness of a wall of the mounting groove 1021. In the embodiments, the socket portion 1011 is overfitted with the mounting groove 1021, and the socket portion 1011 is required to be squeezed into the mounting groove 1021 by extrusion. Setting the socket portion 1011 with less hardness may reduce the difficulty of deformation of the socket portion 1011, such that the socket portion 1011 is more easily to fill the mounting groove 1021; setting the wall of the mounting groove 1021 with greater hardness may reduce the deformation of the mounting groove 1021 due to extrusion, thereby ensuring the stability of the connection between the two.

In some embodiments, the socket portion 1011 is welded to a bottom of the mounting groove 1021, and the black dot in FIG. 3 shows the welding position. In the embodiments, the melting point of the socket portion 1011 is lower than the melting point of the connection member 102. Since the connection member 102 is disposed on the outer side of the battery cap 1, a region corresponding to the bottom of the mounting groove 1021 is a region where the thickness of the connection member 102 is small. In the embodiments, the connection member 102 may be welded in this region, and the heat generated by the welding may be quickly transferred to the socket portion 1011. However, there is a loss of heat in the process of transferring heat, i.e., the temperature of the socket portion 1011 is always lower than the temperature of the connection member 102. Therefore, the setting of the socket portion 1011 with a lower melting point may ensure the socket portion 1011 to melt and connect with the bottom of the mounting groove 1021 even if the temperature of the socket portion 1011 is slightly lower than the temperature of the connection member 102, which not only ensures the stability of the connection between the two, but also improves the sealing of the battery cap 1. In the embodiments, the socket portion 1011 is integrally molded with the limiting portion 1012, i.e., the melting point of the pole body 101 is lower than the melting point of the connection member 102. The material of the pole body 101 may be aluminum or an aluminum alloy, and the material of the connection member 102 may be stainless steel, nickel, or copper, or an external plating layer such as nickel plating, gold plating, or the like may be added to an external surface of the connection member 102 to improve the performance of the connection member 102. In the embodiments, the pole body 101 and the connection member 102 may be welded by laser welding, of course, other welding methods, such as resistance welding, may be used, and the welding method can be selected according to the actual needs.

In some embodiments, a dimension of a cross-section of an end of the socket portion 1011 away from the limiting portion 1012 is smaller than a dimension of a cross-section of an end of the socket portion 1011 near the limiting portion 1012, i.e., the overall shape of the socket portion 1011 is in the form of a rounded plateau or a conical shape. As an interference fit is used between the socket portion 1011 and the mounting groove 1021, the provision of the rounded platform-shaped socket portion 1011 may facilitate the alignment and positioning of the socket portion 1011 with the mounting groove 1021, facilitating the insertion of the socket portion 1011 into the mounting groove 1021. Further, the hardness of the socket portion 1011 is less, the effort required for the extrusion and deformation of the socket portion 1011 is small. After the end of the socket portion 1011 is inserted into the mounting groove 1021, continuous extrusion of the socket portion 1011 may deform the socket portion 1011 so as to fill the mounting groove 1021, thereby realizing an interference fit of the pole body 101 and the connection member 102, and thus realizing assembly and fixation between the pole body 101 and the connection member 102.

In some embodiments, the connection member 102 is arranged with a boss 1022, and an end surface of the boss 1022 is recessed for molding the mounting groove 1021. The boss 1022 is arranged to increase the depth of the mounting groove 1021, thereby increasing the volume of the mounting groove 1021, such that the mounting groove 1021 can accommodate more of the socket portion 1011, thereby improving the connection strength of the pole body 101 and the connection member 102.

In some embodiments, the first sealing member 104 includes a sealing body 1041, a first sealing plate 1042, and a second sealing plate 1043; the first sealing plate 1042 is arranged at an end of the sealing body 1041, and the second sealing plate 1043 is arranged at another end of the sealing body 1041 opposite to the end; the sealing body 1041 defines a through hole 1044, and two ends of the through hole 1044 penetrate the first sealing plate 1042 and the second sealing plate 1043, respectively; the limiting portion 1012 abuts against the first sealing plate 1042, the connection member 102 abuts against the second sealing plate 1043, and the socket portion 1011 is inserted into the through hole 1044. By arranging the first sealing member 104, the electrolyte in the battery may be prevented from flowing out of a wall of the mounting hole 1031, thereby reducing the risk of electrolyte leakage and improving the safety performance of the battery. In the embodiments, the cap body 103 is made of metal; the first sealing member 104 may further act as an insulating member to insulate between the cap body 103 and the pole assembly, and the material of the first sealing member 104 is an insulating rubber or plastic such as soluble perfluoroalkoxy (PFA), polypropylene (PP), polybutylene terephthalate (PBT), or phenylenesulfide (PPS).

In some embodiments, a clamping groove 1045 is formed between the first sealing plate 1042, the second sealing plate 1043, and the sealing body 1041 of the first sealing member 104, and the cap body 103 is inserted into the clamping groove 1045, such that the first sealing plate 1042 and the second sealing plate 1043 together clamp the cap body 103, which improves the sealing between the first sealing member 104 and the cap body 103, reduces the risk of electrolyte leakage, and improves the safety performance of the battery.

The battery cap 1 provided in the embodiments may be applied to a button battery or a pin battery, of course, the application scope of the battery cap 1 provided is not limited to the above two types of batteries, for example, the battery cap 1 provided may also be applied to a square battery.

### Embodiment 3

As shown in FIG. 5, the present embodiment provides a battery including a housing 2, a cell 3, and the battery cap 1 as described in Embodiment 1; the housing 2 and the battery cap 1 are connected, and the pole assembly on the battery cap 1 is electrically connected to the cell 3. Since the battery cap 1 provided in Embodiment 1 has a smaller size, the size of the battery manufactured with the battery cap 1 provided in Embodiment 1 is correspondingly smaller, which is conducive to the lightweight design of the battery, and gives the battery the advantage of small size and high capacity.

In some embodiments, a weak zone 1032 is arranged on the cap body 103 of the battery cap 1, and the thickness of the weak zone 1032 is less than the thickness of the cap body 103. During charging and discharging of the battery, the cell 3 in the battery may expand, and when the cell 3 expands to a certain extent, the battery may have installation hazards, which may cause an explosion in serious cases. By arranging the weak zone 1032 on the cap body 103, when the cell 3 expands resulting in the internal pressure of the battery exceeding a safe range, the weak zone 1032 on the cap body 103 will rupture, thereby releasing the internal pressure of the battery and avoiding an explosion of the battery.

In some embodiments, the cap body 103 includes a first portion 1033 and a second portion 1034 that are connected to each other; the weak zone 1032 is arranged at a connection position of the first portion 1033 and the second portion 1034; the mounting hole 1031 is arranged in the first portion 1033, and the first portion 1033 and the second portion 1034 are arranged staggered in a thickness direction of the cap body 103. In the embodiments, a stamping process is applied to mold the weak zone 1032, the first portion 1033, and the second portion 1034. The stamping process is simple, and the use of stamping to mold the weak zone 1032 reduces the difficulty of manufacturing the battery cap 1, thereby reducing the manufacturing cost of the battery. During a manufacturing process, the plate-like cap body 103 may be formed first, the weak zone 1032, the first portion 1033, and the second portion 1034 may be stamped and formed on the cap body 103, and then finally the first portion 1033 may be punched to define the mounting hole 1031.

In the embodiments, the housing 2 is made of metal; the housing 2 may be made of stainless steel or nickel, or nickel plating may be applied to the housing 2 made of carbon steel; a positive tab 301 of the cell 3 is welded to the pole assembly, and a negative tab 302 of the cell 3 is welded to an inner side wall of the housing 2; laser welding or resistance welding may be applied between the negative tab 302 of the cell 3 and the housing 2. In some embodiments, the negative tab 302 of the cell 3 may be welded to the pole assembly, and the positive tab 301 of the cell 3 may be welded to the inner side wall of the housing 2. By arranging the negative tab 302 of the cell 3 to be welded to the inner side wall of the housing 2, the size of the housing 2 along a longitudinal direction may be reduced, thereby reducing the size of the battery along the longitudinal direction, such that the structure of the battery may be adapted to a variety of use environments. In other embodiments, when the battery cap 1 is arranged with two pole assemblies, the positive tab 301 and the negative tab 302 of the battery cell 3 may be connected to the two pole assemblies on the battery cap 1, respectively.

In some embodiments, the battery includes a blocking assembly, a liquid injection hole 201 is defined on a bottom of the housing 2, and the blocking assembly is arranged to block the liquid injection hole 201. During the assembling process, the electrolyte may be injected into the housing 2 through the liquid injection hole 201, and the liquid injection hole 201 may be blocked with a blocking member to realize sealing of the battery.

In some embodiments, the blocking assembly includes a plug 4 and a second sealing ring 5; the second sealing ring 5 is wrapped around an outer periphery of the plug 4; after the plug 4 is inserted into the liquid injection hole 201, the plug 4 and a wall of the liquid injection hole 201 jointly squeeze the second sealing ring 5 to realize the sealing. The second sealing ring 5 is made of soluble perfluoroalkoxy (PFA), polypropylene (PP), polybutylene terephthalate (PBT), or phenylenesulfide (PPS), etc.

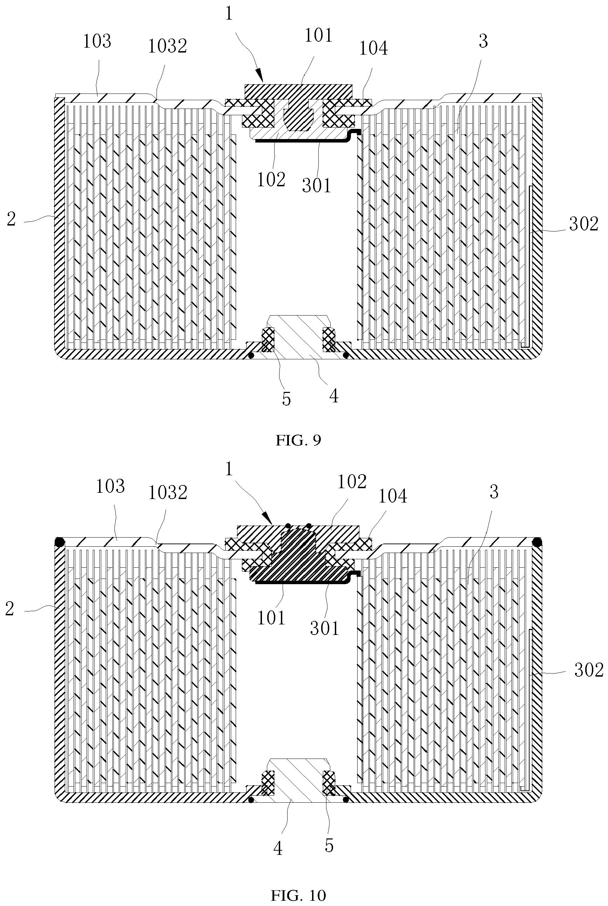

In some embodiments, the plug 4 is welded to the housing 2, and the black dot in FIG. 9 shows the welding position, which further improves the sealing between the plug 4 and the housing 2 and avoids leakage of the electrolyte. During the assembling process, after the liquid injection is completed, the second sealing ring 5 and the plug 4 may be assembled as the blocking assembly, the blocking assembly is inserted into the injection hole 201, followed by chemical formation and partitioning processes on the battery, and finally the plug 4 and the housing 2 are welded. During the period of chemical formation and partitioning processes, the cell 3 may expand to a certain extent, and the pressure inside the battery will increase, in which case the gas inside the battery may escape through a very small gap between the blocking assembly and the liquid injection hole 201 to reduce the internal pressure of the battery. After the battery is completed with the chemical formation and the partitioning processes, the housing 2 and the plug 4 are subjected to the welding process to realize the sealing of the battery.

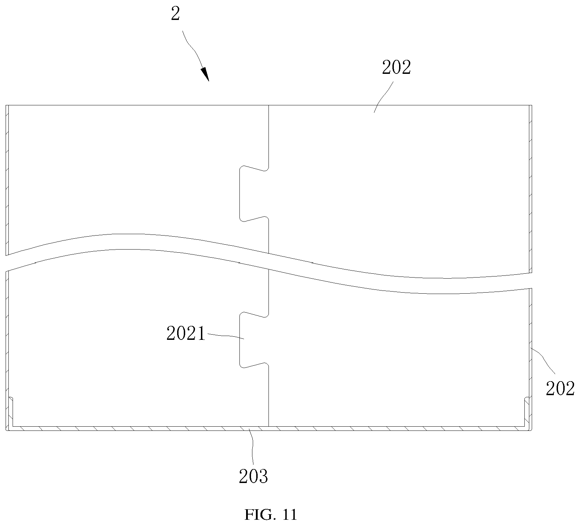

Referring to FIG. 11, the housing 2 includes a housing body 202 and a housing bottom 203; the housing body 202 is a cylindrical structure with openings at both ends, and the housing body 202 is welded and molded by bending of a plate; the plate has a first side and a second side that are welded and connected; the first side defines a first groove, and a width of a bottom of the first groove is greater than a width of an opening of the first groove; the second side is arranged with a protrusion 2021 that is adapted to the shape of the first groove, and the projection 2021 is inserted into the first groove when the first side and the second side are in contact. The manufacturing the housing body 202 by means of plate bending and molding can reduce the amount of deformation of the plate, thereby avoiding defects such as cracks in the plate, and reducing the difficulty of manufacturing the housing body 202. By arranging the first groove and the projection 2021, pre-fixing may be achieved for the plate before welding the plate after bending it into place, thereby reducing the difficulty of welding the plate while also ensuring the manufacturing precision of the housing body 202. The first groove and the projection 2021 have a simple structure and are convenient for processing, which may reduce the manufacturing difficulty of the housing body 202; and the coordination of the first groove and the projection 2021 may make the wall thickness of the housing body 202 basically the same at each place, thereby reducing the space occupied by the housing body 202, and improving the utilization rate of the internal space of the housing body 202.

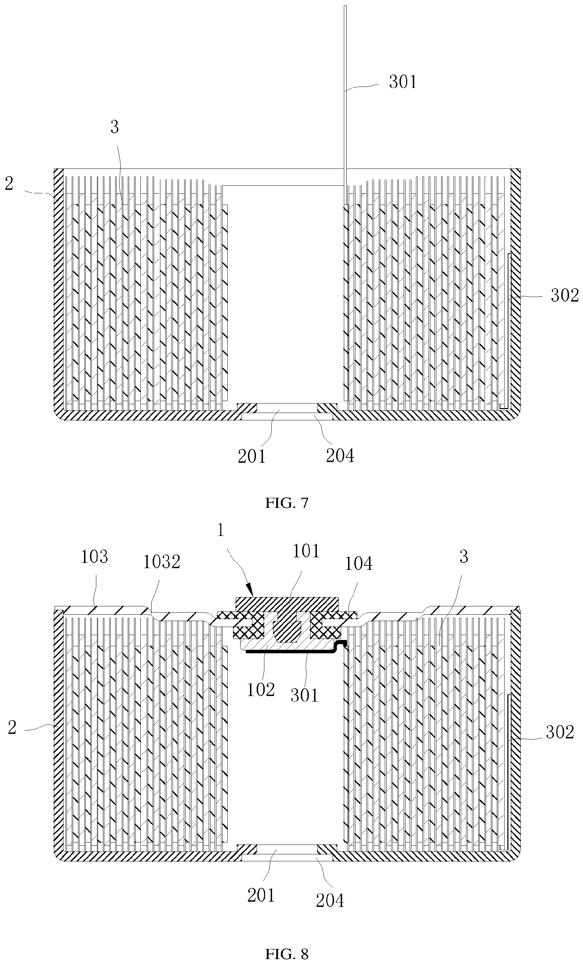

Referring to FIG. 5, in the embodiments, the cell 3 is a jellyroll, the cell 3 is a hollow structure, and the pole assembly and the blocking assembly may be partially embedded in a hollow region in the middle of the cell 3, for reducing the height of the battery. Referring to FIGS. 1 and 2, a second groove 1035 is defined on the cap body 103 of the battery cap 1, and the mounting hole 1031 is defined on a bottom of the second groove 1035. By arranging the second groove 1035, the size of the pole assembly embedded in the hollow region of the cell may be increased to further reduce the height of the battery. Referring to FIGS. 7 and 8, a third groove 204 is defined on the bottom of the housing 2, and the liquid injection hole 201 is defined on a bottom of the third groove 204. The third groove 204 may accommodate the blocking assembly, such that the blocking assembly does not protrude out of the housing 2, thereby reducing the overall size of the battery.

Referring to FIGS. 1, 2, and 5, a fourth groove 1036 is defined on a side of the cap body 103 near the housing 2, an edge of the housing 2 is inserted into the fourth groove 1036, and the housing 2 and the cap body 103 are welded together. By arranging the fourth groove 1036, the thickness of the connection region between the cap body 103 and the housing 2 may be reduced, thereby reducing the difficulty of welding between the two. In some embodiments, the fourth groove 1036 may further play a role in limiting the assembly of the two, and during the assembling process, the edge of the housing 2 is inserted into the fourth groove 1036, which may pre-fix the housing 2 and the cap body 103, thereby reducing the difficulty of welding between the two.

When the height-to-diameter ratio of the corresponding battery according to the embodiments is less than 1, the embodiments are applied to a cylindrical button battery, which may reduce the thickness of the button battery to 4mm. In some embodiments, the thickness of the button battery is 5.6mm, and the diameter of the battery is in the range of 6mm to 15mm. In some embodiments, the diameter of the battery is 10mm. When the height-to-diameter ratio of the corresponding battery according to the embodiments is greater than 1, the embodiments are applied to a cylindrical pin battery, and the diameter of the pin battery may be as low as 2.8mm. Similarly, when the embodiments are applied to a square battery, the thickness of the battery may also be greatly reduced.

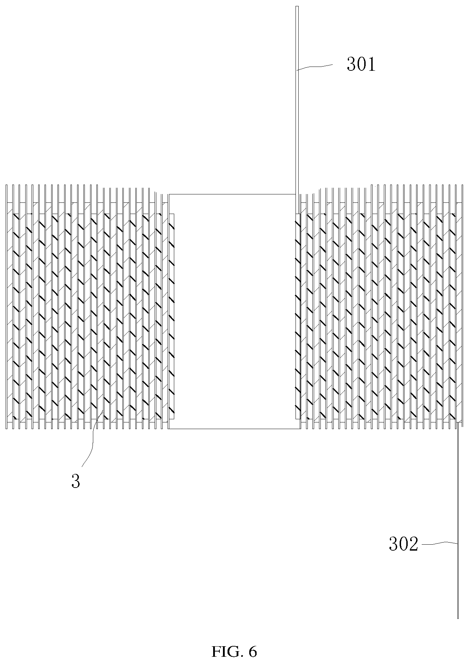

Referring to FIGS. 6 to 9, the battery in the above embodiments may be assembled in accordance with the following steps.

Step 100: providing a coiled-completed cell 3, where the cell 3 includes a positive tab 301 and a negative tab 302.

Step 200: inserting the cell 3 into a housing 2, and welding the negative tab 302 of the cell 3 to an inner side wall of the housing 2.

Step 300: welding a pole assembly on the battery cap 1 to the positive tab 301 of the cell 3, and welding the battery cap 1 to the housing 2.

Step 400: injecting electrolyte into the housing 2 through a liquid injection hole 201, and inserting the blocking assembly into the liquid injection hole 201.

Step 500: performing chemical formation and partitioning processes on the battery.

Step 600: welding a plug 4 and the housing 2 to complete sealing of the battery.

### Embodiment 4

As shown in FIG. 10, the present embodiment provides a battery that differs from the battery described in Embodiment 3 only in that the battery described in this embodiment utilizes the battery cap 1 described in Embodiment 2; the housing 2 is connected to the battery cap 1, and the pole assembly on the battery cap 1 is electrically connected to the battery cell 3. Since the battery cap 1 of Embodiment 2 has a smaller size, the size of the battery manufactured using the battery cap 1 provided in Embodiment 2 is correspondingly smaller, which is conducive to the lightweight design of the battery, and gives the battery the advantage of small size and high capacity.

The remaining features of the battery of the present embodiment are the same as those of the battery provided in Embodiment 3, for example, the battery provided in the present embodiment also has a weak zone 1032, a fluid injection hole 20, etc., and the beneficial effects of the corresponding features are also the same as those of Embodiment 3, which will not be repeated herein.

In the description herein, it is to be understood that the terms "top", "bottom", "left", "right", etc. are based on the orientation or positional relationships shown in the accompanying drawings, are intended only for ease of description and simplification of operation, are not intended to indicate or imply that the device or element referred to must be constructed and operated with a particular orientation, and therefore are not to be construed as a limitation of the present disclosure. In addition, the terms "first" and "second" are intended only to make a distinction in the description and have no special meaning.

In the description of the specification, the description with reference to the terms "some embodiments", "examples", etc. means that the specific features, structures, materials, or characteristics described in connection with an embodiment or example are included in at least one embodiment or example of the present disclosure. In this specification, schematic expressions of the above terms do not necessarily refer to the same embodiment or example.

## Claims

1. A battery cap, comprising:
a cap body, defining a mounting hole; and
a pole assembly, sealingly connected to the cap body and comprising a pole body and a connection member; wherein the pole body is disposed on a side of the cap body, and the connection member is disposed on another side of the cap body; the pole body comprises a limiting portion and a socket portion that are connected to each other, the socket portion being disposed on a side of the limiting portion, and a side of the connection member close to the pole body is recessed to define a mounting groove; the socket portion is inserted into the mounting groove through the mounting hole, for fixing the pole body and the connection member.

2. The battery cap according to claim 1, wherein the socket portion and the mounting groove are in a mortise-and-tenon connection.

3. The battery cap according to claim 1 or 2, wherein the socket portion is welded to a bottom of the mounting groove.

4. The battery cap according to claim 2, wherein a hardness of a wall of the mounting groove is less than a hardness of the socket portion.

5. The battery cap according to claim 4, wherein the pole body is disposed on an outer side of the cap body; a dimension of a cross-section of an end of the socket portion away from the limiting portion is larger than a dimension of a cross-section of an end of the socket portion near the limiting portion.

6. The battery cap according to claim 5, wherein a side of the connection member near the pole body protrudes to form a boss, and an end surface of the boss is recessed for defining the mounting groove.

7. The battery cap according to claim 6, wherein the boss penetrates the mounting hole.

8. The battery cap according to claim 2, wherein the pole body is disposed on an inner side of the cap body, and the socket portion has an interference fit with the mounting groove.

9. The battery cap according to claim 8, wherein a hardness of the socket portion is less than a hardness of a wall of the mounting groove.

10. The battery cap according to claim 1, wherein a melting point of the socket portion is lower than a melting point of the connection member.

11. The battery cap according to claim 8, wherein a dimension of a cross-section of an end of the socket portion away from the limiting portion is smaller than a dimension of a cross-section of an end of the socket portion near the limiting portion.

12. The battery cap according to claim 11, further comprising a first sealing member, wherein the first sealing member comprises a sealing body, a first sealing plate, and a second sealing plate; the first sealing plate is arranged at an end of the sealing body, and the second sealing plate is arranged at another end of the sealing body; the sealing body defines a through hole, and two ends of the through hole penetrate the first sealing plate and the second sealing plate, respectively; the limiting portion abuts against the first sealing plate, the connection member abuts against the second sealing plate, and the socket portion is inserted into the through hole.

13. A battery, comprising a housing, a cell, and the battery cap according to any one of claims 1-12; wherein the cell is arranged in the housing, the battery cap is connected to the housing, and the pole assembly on the battery cap is electrically connected to the cell.

14. The battery according to claim 13, wherein a weak zone is arranged on the cap body of the battery cap, and a thickness of the weak zone is less than a thickness of the cap body.

15. The battery according to claim 14, wherein the cap body comprises a first portion and a second portion that are connected to each other; the weak zone is arranged at a connection position of the first portion and the second portion; the first portion and the second portion are arranged staggered in a thickness direction of the cap body.

16. The battery according to claim 13, wherein the housing comprises a housing body and a housing bottom; the housing body is a cylindrical structure with openings at both ends, and the housing body is welded and molded by bending of a plate; the plate has a first side and a second side that are welded and connected; the first side defines a first groove, and a width of a bottom of the first groove is greater than a width of an opening of the first groove; the second side is arranged with a protrusion that is adapted to a shape of the first groove, and the projection is inserted into the first groove when the first side and the second side are in contact;
the housing bottom is welded to a first end of the housing body, the housing bottom is arranged to seal a second end of the housing body, and the battery cap is arranged to seal the second end of the housing body.

17. The battery according to claim 13, further comprising: a blocking assembly, wherein the blocking assembly comprises a plug and a second sealing ring; the second sealing ring is wrapped around an outer periphery of the plug; a liquid injection hole is defined on a bottom of the housing, and the plug is capable of being inserted into the liquid injection hole.
